# EUROPÄISCHE PATENTANMELDUNG

(11) **EP 4 606 849 A1**
(43) Veröffentlichungstag der Anmeldung: **27.08.2025**
(21) Anmeldenummer: 24159201.3
(22) Anmeldetag: 22.02.2024
(51) Int. Cl.: C08K 3/34, C08K 5/05, C08L 29/04, B32B 27/30, C08J 5/18

(54) **BIOPOLYMER MIT SCHICHTSILIKATEN**

(71) Anmelder: Tchibo GmbH, 22297 Hamburg (DE)
(72) Erfinder: BÖLZ, Uwe, 82327 Tutzing (DE)
(74) Vertreter: Frei Patent Attorneys

(57) **Zusammenfassung**

Die vorliegende Erfindung betrifft eine Zusammensetzung, die insbesondere zur Herstellung von Lebensmittelverpackungen geeignet ist. Die Zusammensetzung kann dabei zur Herstellung einer Schicht einer mehrschichtigen Verpackung verwendet werden und umfasst Polyvinylalkohol und ein Schichtsilikat, bevorzugt Mikrotalkum. Die Zusammensetzung kann dabei sowohl eine Gas- als auch eine Wasserbarriere bilden und kann insbesondere eine hervorragende Haftung zwischen anderen Schichten vermitteln.

## Beschreibung

Die vorliegende Erfindung betrifft eine Zusammensetzung, die insbesondere zur Herstellung von Lebensmittelverpackungen geeignet ist. Die Zusammensetzung kann dabei zur Herstellung einer Schicht einer mehrschichtigen Verpackung verwendet werden. Die Zusammensetzung kann dabei sowohl eine Gas- als auch eine Wasserbarriere bilden und kann insbesondere eine hervorragende Haftung zwischen anderen Schichten vermitteln.

Das weit verbreitete und wichtige Prinzip der Nachhaltigkeit gilt auch für Verpackungsmaterialien. Die Verwendung von Biopolymeren zur Herstellung von Verpackungen ist bekannt und nimmt weiter zu, wobei Biopolymere herkömmliche Polymere auf fossiler Basis ersetzen oder ergänzen.

Als Biopolymer gelten auf erneuerbaren Ressourcen basierende Polymer oder Polymere, die biologisch abbaubar sind. Der am häufigsten verfügbare, erneuerbare Rohstoff ist Zellulose, die hauptsächlich aus Holz, Baumwolle und einjährigen Pflanzen gewonnen wird. Zellulose hat jedoch inhärente Nachteile, die ihre Verwendung einschränken: schlechte Löslichkeit in gängigen Lösungsmitteln, was die Verwendung als Beschichtung erschwert, und die fehlende Thermoplastizität, die für die direkte Extrusion erforderlich ist. Darüber hinaus ist Cellulose hygroskopisch und reagiert mit Wasserdampf, was zu einer Quellung führt. Sie hat zudem weder eine hohe Gas- noch eine Aromabarriere. Vor allem letzteres behindert die Verwendung von Materialien auf Zellulosebasis in Verpackungsanwendungen für feuchte Lebensmittel oder feuchte Umgebungen. Um diese Nachteile zu überwinden, wird Zellulose mit hydrophoben Schichten kombiniert. Ähnliches gilt auch für stärkebasierte Polymere/Lösungen für Beschichtungen bzw. Folien.

Polyvinylalkohol (PVOH) ist ein weiteres häufig verwendetes Biopolymer für Lebensmittelverpackungen. PVOH ist ein wasserlöslicher und in wässriger Umgebung biologisch abbaubarer Kunststoff. PVOH Kunststoffe zeichnen sich durch eine hohe Reißfestigkeit und Elastizität aus. Diese Eigenschaften sind abhängig von der Luftfeuchtigkeit, da der Kunststoff Wasser absorbiert. Je nach Zusammensetzung weisen Sie eine kontrollierbare Wasserauflösungstemperatur von 5-90 °C auf. Als thermoplastischer Kunststoff lassen sich einige PVOH-Typen grundsätzlich mit den gängigen Kunststoffverarbeitungsverfahren und die wasserlöslichen Typen als Lösung in Wasser verarbeiten. Bei geeigneter Rohstoffauswahl inkl. Additivierung (v. a. Zugabe von Weichmachern) eignet sich sowohl für die Folienextrusion, das Thermoformen, den Spritzguss als auch das Blasformen.

Polyvinylalkohol ist beständig gegenüber Ölen, Fetten und organischen Lösungsmitteln. Aufgrund seines hydrophilen Charakters ist Polyvinylalkohol gut als Barriere gegen Fette und Mineralöle geeignet. Die Wasserstoffbrückenbindungen zwischen den Polymerketten in Verbindung mit der kristallinen Struktur machen Polyvinylalkohol zu einer hervorragenden Barriere gegen Sauerstoff, Stickstoff, Kohlendioxid und organische Lösemittel.

Je nach PVOH lösen sich Produkte aus PVOH vollständig und rückstandfrei in Wasser auf. In gelöster Form kann es verarbeitet und zur Wiederverwendung zurückgewonnen werden oder durch die Einwirkung von Mikroorganismen und Bakterien vollständig zu Wasser (H₂O) und Kohlenstoffdioxid (CO₂) abgebaut werden. Im Gegensatz zu nicht abbaubaren Polymeren, egal ob fossil oder biobasiert, erzeugen einmal aufgelöste wasserlösliche PVOH-Granulate und Produkte kein Mikroplastik.

Aufgrund der guten Barriereeigenschaft gegen Sauerstoff, CO₂ und andere polare, gasförmige/flüchtige Verbindungen wie z. B. Aromastoffe wird PVOH oft als Barriere-Schicht in einem Mehrschichtsystem für Lebensmittelverpackungen verwendet. Ein Nachteil ist seine fehlende Barriere gegenüber Wasserdampf.

Im Regelfall wird durch Vernetzung (Crosslinking) die Widerstandsfähigkeit gegen Wasser verbessert. Allerdings verringert sich je nach Vernetzungsdichte auch die Barrierewirkung gegenüber Gasen und die Geschwindigkeit der Abbaubarkeit. Um gute Wasserbeständigkeit mit hohem Barriereniveau zu kombinieren, kann ein Metallkomplexbildner eingesetzt werden. Oder man kann unpolare Wasserdampfsperrschichten mit PVOH-Schichten kombinieren. Allerdings lassen sich die unpolaren Wasserdampfsperrschichten nur schlecht mit polarem PVOH aufeinander aufbringen. Durch Vorbehandlung der unpolaren Oberflächen mittels Corona-(Plasma-)Vorbehandlung bzw. dem Einsatz von Haftvermittlern lassen sich gute Haftungswerte erreichen.

Die Aufgabe der Erfindung ist es eine PVOH enthaltende Zusammensetzung bereit zu stellen, die Nachteile von reinem PVOH verbessert und zugleich die vorteilhaften Eigenschaften erhält. Dabei wird, je nach Anteil der zugegebenen Additive, bei mindestens gleichbleibender bis deutlich verbesserter, hervorragender Barriere gegen Sauerstoff, Stickstoff, Kohlendioxid und organische Lösemittel zusätzlich eine verbesserte Barriereeigenschaft gegen Wasser respektive Wasserdampf erreicht. Auch die Haftung auf anderen Materialien, insbesondere auch ähnlich modifizierte unpolaren Materialien wird deutlich verbessert. Bei der Herstellung von Beschichtungen aus den Zusammensetzungen erreicht man eine höhere Prozessstabilität durch deutlich verringerte Schaumbildung und eine geringere Defektbildung.

Mindestens einen dieser Aspekte der Aufgabe löst eine Zusammensetzung, umfassend
2 - 95 Gew. % Polyvinylalkohol
3 - 70 Gew. % eines Schichtsilikats oder vergleichbaren Minerals
0 - 30 Gew% Weichmacher und/oder weitere Additive und optional Wasser
wobei das Schichtsilikat in Form von Mikro- und Nanopartikeln vorliegt. Die Partikel sind bevorzugt plättchenförmig. Dies heisst, sie sind dünn aber flächig. Anders ausgedrückt sind die Länge und Breite der Partikel grösser als Ihre Dicke.

Die Zusammensetzung ist aufgrund der hervorragenden Barriereeigenschaften besonders für die Herstellung von Lebensmittelverpackungen geeignet. Es haben sich aber auch noch weitere Verwendungen als geeignet erwiesen, wie generell Schutz-Beschichtungen (von Obst, Baubranche, Bekleidung) als Haftvermittler bzw. Klebstoff sowie Barrierebeschichtung in der Verpackungsindustrie (für Papier, Folien und deren Mehrschichtverbunde). Dabei dient die Zusammensetzung vor allem als Material für Barrierezwischenschichten in mehrschichtige Folien bzw. Foliepapierverbunden und insbesondere zusätzlich zur Barriereverbesserung, der Verbesserung der Haftung zwischen Kunststoffschichten, die ähnlich polar sind d. h. OH- oder Säurefunktionen besitzen und/oder selbst Füllstoffe enthalten können. Diese können entweder durch Coextrusion oder Coating/Kaschierung zusammengefügt bzw. aufgebaut werden. Die Zusammensetzung ist dabei sehr vorteilhaft, weil eine sehr gute Haftung mit verbesserten Barriereeigenschaften kombiniert wird.

Je nach Verwendung der Zusammensetzung können die Mengen an Polyvinylalkohol und Schichtsilikat variiert werden. Höhere Mengen an Polyvinylalkohol erhöhen z.B. v. a. in Kombination mit geeigneten Weichmachern (inkl. Wasser) die Klebrigkeit und Elastizität, verringern aber die Barrierewirkung der mineralischen Additive. Die Schichtsilikate haben grundsätzlich aufgrund ihrer chemischen Zusammensetzung mit vielen oberflächlich vorhandenen OH-Funktionen einen positiven Einfluss auf die Haftung zu polaren Untergründen. Die Zusammensetzung kann daher 2 - 95 Gew. % Polyvinylalkohol, bevorzugt 20 - 80 Gew.% Polyvinylalkohol, bevorzugt 30 - 70 Gew.% Polyvinylalkohol und weiter bevorzugt 40 - 65 Gew.% Polyvinylalkohol enthalten.

Die Menge an Schichtsilikat betrifft die gesamte Menge aus Schichtsilikaten in Form von Mirco- und Nanopartikeln und kann 3 - 95 Gew. % der fertigen Zusammensetzung, bevorzugt 5 - 80 Gew.%, bevorzugt 10 - 70 Gew.%, 15 - 60 Gew.% und weiter bevorzugt 25 - 50 Gew.% ausmachen.

Polyvinylalkohol (PVOH,) ist dabei ein synthetisches Polymer des Vinylalkohols, der nicht als freies Monomer existiert. Charakteristisch für Polyvinylalkohole ist die Vinylalkohol-Einheit [CH₂CH(OH)]ₙ. Polyvinylalkohol ist in der Regel leicht verzweigt und weist einen Polymerisationsgrad von etwa 500 bis 2500 auf. Polyvinylalkohole Polymere werden gewöhnlich durch den Austausch der Acetatgruppen von Polyvinylacetat durch Hydroxylgruppen, z.B. durch Hydrolyse oder Alkoholyse, hergestellt. Der Prozentsatz der durch Hydroxylgruppen ersetzten Acetatgruppen ist der Hydrolysegrad des erzeugten PVOH und kennzeichnet den Prozentsatz der im PVOH vorhandenen Hydroxylgruppen von den gesamten möglichen Hydroxylgruppen. Die vorliegende Erfindung umfasst mögliche Zusammensetzungen deren PVOH einen Hydrolysegrad von 60 bis 98 % aufweist und somit wasserlöslich ist, und bevorzugt von 75 bis 95% und weiter bevorzugt von 80 bis 90%. Die vorliegende Erfindung umfasst zudem Zusammensetzungen deren PVOH ein Molekulargewicht von 13 000 bis 80 000 aufweist, und bevorzugt von 15 000 bis 60 000 und weiter bevorzugt von 30 000 bis 50 000. Das verwendete PVOH hat bevorzugt bei niedrigen Wassertemperaturen eine gute Löslichkeit. Es ist bevorzugt, wenn man mit dem PVOH der vorliegenden Erfindung bei 20 °C eine mindestens 4% Lösung in Wasser herstellen kann. Dies ermöglicht eine schnelle Abbaubarkeit, auch im Meerwasser (bei 4°C). Gleichzeitig soll das PVOH niedermolekular sein (Molgewicht 30 - 50.000 D), und kann somit sehr leicht, schnell und in großen Anteilen bei noch verarbeitbarer Viskosität (50 Gew. % bei 25°C) in Wasser gelöst werden. So ist zudem eine grosse Menge an mineralischen Füllstoffen (Verhältnis von mindestens 1: 1) bei noch ausreichender Bindemittelwirkung zumischbar.

Durch die Zugabe der Mikro- und Nanopartikel des Schichtsilikats, kann, mit absoluter Undurchlässigkeit für die meisten Gase, eine geringere Wasserbarriere eines kaltlöslichen PVOH (mit den genannten Vorteilen) ausgeglichen werden. Somit wird eine gute Barriere mit einer guten Löslichkeit in kaltem Wasser verbunden. Damit erreichen die Zusammensetzung gleichzeitig beide Eigenschaften, die von Vorteil sind.

Eine höhere Wasserbarriere kann mit reinem PVOH nur erreicht werden, wenn schlecht wasserlösliche Polymere verwendet werden. Dies resultiert in schlechteren Abbaugeschwindigkeiten bei höheren Umgebungstemperaturen und höheren Preisen.

Als Schichtsilikate (auch Blattsilikate, Phyllosilikate) bezeichnet man Silikate, deren Silikatanionen aus Schichten eckenverknüpfter SiO₄-Tetraeder bestehen. Diese Schichten oder Doppelschichten sind untereinander nicht über weitere Si-O-Bindungen zu Gerüsten verknüpft. Mögliche Schichtsilikate für die erfindungsgemäße Zusammensetzung sind Bentonit, Montmorillonit, Hektorit, Pyrophyllit Al₂[(OH)₂|Si₄O₁₀], Apophyllit, Muskovit, Phlogopit und Talk, wobei Talk aufgrund seiner guten Verfügbarkeit bevorzugt wird.

Eine Ausführungsform bezieht sich auf Zusammensetzungen wobei das Schichtsilikat in Form von Mirco- und Nanopartikeln als Mischung aus Talkum und einem verwandten ähnlichen Schichtsilikat, wie Montmorillonit, vorliegt, wobei die Mikropartikel aus Talkum und die Nanopartikel aus einem anderen Schichtsilikat wie Montmorillonit, bestehen können. Dementsprechend bezieht sich der Begriff «Schichtsilikat» hierin generell sowohl auf ein Schichtsilikat, insbesondere Talkum, als auch auf eine Mischung aus mindestens zwei Schichtsilikaten.

Das Mineral Talk, in pulverisierter Form auch als Talkum bekannt, hat die chemische Zusammensetzung Mg₃[(OH)₂|Si4O₁₀] und ist damit chemisch gesehen ein Magnesium silikathydrat.

Die Mikropartikel- und Nanopartikelherstellung von Talk kann, ausgehend vom natürlich vorkommenden Mineral, mit physikalischen und chemischen Methoden durchgeführt werden. Bei physikalischen Methoden werden Partikel durch Größenreduzierung des Ausgangsmaterials, z.B. durch Zermahlen nach dem Abbau, erzeugt (Top-down-Ansatz). Talk kann aber auch synthetisch hergestellt werden (Bottom-up-Ansatz). Es hat sich als vorteilhaft erwiesen, wenn die verwendeten Nanopartikel chemisch synthetisiert wurden, da eine gleichmässigere Grössenverteilung und eine bessere Schichtung erreicht werden können.

Durch eine Verwendung von Schichtsilikaten in einer PVOH-Lösung sind insgesamt höhere Feststoffanteile möglich. Dadurch sind höhere Schichtdicken möglich und die Verfahren zur Herstellung der Beschichtung mit weniger Wasser energiesparend. Es können zudem wesentlich höhere Sauerstoff-Barrierewerte bei vergleichbarer Schichtdicke als mit reinem PVOH erreicht werden. Durch eine geeignete Vorbarriere können auch höhere Wasserdampfbarrierwerte erreicht werden. Geeignete Vorbarrieren können Schichten aus PE, PP, EEA oder Mischungen aus Polymeren und Copolymeren sein.

Das Schichtsilikat sollte möglichst kleine Partikel mit möglichst hohem Flächen-Dicken-Verhältnis haben. Eine höhere Konzentration in der Zusammensetzung führt dabei zu einer maximalen («mechanischen») Sperrwirkung gegen diffundierende Gase in einer damit hergestellten Beschichtung. Bei zu geringen Teilchengrößen wird wegen der Erhöhung der aktiven Oberflächenwechselwirkungen eine vermehrte Agglomeration der einzelnen Teilchen beobachtet. Dies führt zu einem extremen Anstieg der Viskosität in den Zusammensetzungen. Eine homogene Dispersion lässt sich dann nicht mehr herstellen. Nanotalkum bzw. Nanosilikate alleine kann man daher nur schlecht und in geringen Mengen zusetzen. Oberhalb von ca. 10 Gew.% Zugabe Nanotalkum entsteht ohne Scherung ein gelartiger Feststoff. Die gleichzeitige Zugabe von Mikrotalkum erlaubt jedoch höhere Mengen an Talkum bzw.Feststof insgesamt und von Nanopartikel. Zudem wirkt die Mischung aus beiden Partikeln synergistisch bei der Verbesserung der Gasbarriereeigenschaften der Zusammensetzung bzw. der daraus hergestellten Folien oder Schichten. Ein Erklärungsansatz ist, dass die Füllung der Lücken im Mikrotalkum mit den wesentlich kleineren Nanopartiklen zur dichteren Packung der Partikel und damit zu einer wesentlich besseren Sperrwirkung führt.

Es hat sich erstaunlicherweise gezeigt, dass eine optimale Zusammensetzung durch die Verwendung beider Partikelgrössen in einem bestimmten Mischungsverhältnis erreicht wird.

Durch die hier offenbarte Mischung aus Mikropartikeln und Nanopartikel können die Vorteile der Zusammensetzung erzielt werden. Bei einer verringerten Viskositätserhöhung (geringer als bei einer Verwendung der gleichen Menge Talkum in den Submikro-Partikelgrössen) ist insgesamt eine hohe Konzentration mineralischer Feststoffe und auch ein höherer Gesamtfeststoffgehalt (inklusive PVOH) in der Gesamtmischung erreichbar. Gleichzeitig wird beim Mischen die Homogenisierung der Partikel erleichtert und die Schaumanfälligkeit der Zusammensetzung und damit die Defekthäufigkeit in der erzeugten Schicht erheblich reduziert. Nicht zuletzt ist die Gasbarriere der erzeugten Schicht verbessert.

Eine Ausführungsform der Erfindung betrifft Zusammensetzungen wobei die Mikropartikel einen Durchmesser von 0.3 - 10 µm und die einzelnen Nanopartikel einen maximalen Durchmesser (Länge) von 100 - 300 nm aufweisen. Die Mikropartikel können genauer durch die maximale und die mittlere (mediane) Partikelgrösse charakterisiert werden. Hier ist es bevorzugt, wenn die Mikropartikel eine maximale Partikelgrössse (d98%) kleiner 15 µm, bevorzugt kleiner 12 µm und weiter bevorzugt kleiner 10 µm aufweisen. Die mediane Partikelgrösse (d50%) kann im Bereich von 0,5 µm bis 5 µm, bevorzugt zwischen 1 µm und 2,5 µm liegen.

Die Dicke der Nanopartikel kann dabei im Bereich von 2 bis 50 nm, bevorzugt 8 - 25 nm und weiter bevorzugt 10 - 20 liegen. Es ist bevorzugt, dass die Nanopartikel eine Dicke in einem Bereich von 5 bis 50 nm und ein Längenverhältnis einer Partikelgröße zur Dicke in einem Bereich von 20.000 bis 5, bevorzugt 5000 bis 20 und im Idealfall 500 bis 50 besitzen. Dies bezieht sich auf einzelne, nicht agglomerierte Nanopartikel.

Das Verhältnis in Gewichtsprozent von Mikro- zu Nanaopartikeln in der erfindungsgemäßen Zusammensetzung kann zwischen 70:30 und 95:5 liegen. Bevorzugt ist dabei ein Bereich von 75:25 und 90:10 bzw. 80:20 und 85:15.

Als Weichmacher dienen Substanzen, die bewirken, dass die Zusammensetzung bzw. daraus hergestellte Produkte, wie Filme, Verpackungen oder Klebstoffe, weicher, flexibler und geschmeidiger sind. Sie erhöhen die Plastizität, Zähigkeit und erniedrigen die Viskosität.

Weichmacher im Sinne dieser Erfindung können ausgewählt werden aus einer Gruppe bestehend aus Glycerin, Sorbit, Propylenglykol, Citronensäuretriethylester und 2-Methyl-1,3-propandiol. Bevorzugt ist Glycerin. Weichmacher, deren Wirkung auf zwischenmolekulare Wechselwirkungen (meist in Form von OH-Funktionen über Wasserstoffbrücken) beruhen, sind gegenüber Weichmachern, die über eine Copolymerisation wirken, bevorzugt. Daher wirkt auch enthaltenes restliches (Gleichgewichts-)wasser wie bei allen polymerbasierten polaren Biopolymeren (Cellulose-/Papierfasern, Holz, Nägel, Haare, Haut) als Weichmacher.

Die erfindungsgemäße Zusammensetzung kann neben den bislang genannten Komponenten (PVOH, Schichtsilikat und Weichmacher) auch ein Lösungsmittel, bevorzugt Wasser, sowie weitere Zusatzstoffe enthalten.

Das Lösungsmittel kann bis zu 95 Gewichtsprozent der erfindungsgemäßen Zusammensetzung ausmachen. Bevorzugt sind Zusammensetzungen mit bis zu 70 Gew. % Wasser bzw. mit einem Wassergehalt von 1 - 70 Gew. %, 2 - 60 Gew.% und weiter bevorzugt von 5 bis 50 Gew.% Wasser. Wasser ist aber nicht essentiell. Es definiert bzw. beeinflusst vor allem das mögliche Verfahren zur Verarbeitung, insbesondere zur Auftragung der Zusammensetzung. Es können auch Zusammensetzungen ohne Wasser verwendet werden. Diese können z.B. per Schmelzverfahren z. B. mithilfe einer Schlitzdüse als Beschichtung aufgetragen werden.

Die weiteren Zusatzstoffe können bis zu 5 Gewichtsprozent der erfindungsgemäßen Zusammensetzung ausmachen. Bevorzugt sind Zusammensetzungen mit weniger als 1 Gew.% nicht explizit genannten Zusatzstoffen bzw. mit einem Zusatzstoffgehalt von 0,1 - 1 Gew.% und weiter bevorzugt von 0,01 bis 0,5 Gew.%. Mögliche Zusatzstoffe sind andere Polymere, Antiblock- und Slipadditive, Stabilisatoren, wie Lichtschutzmittel, Pigmente und Farbstoffe.

Eine Ausführungsform betrifft daher Zusammensetzungen, insbesondere für die Herstellung von Lebensmittelverpackungen, enthaltend
5 - 95 Gew. % Polyvinylalkohol
5 - 95 Gew. % eines Schichtsilikats
0 - 30 Gew% Weichmacher
0 - 2 Gew% Zusatzstoffe wie Gleit- oder Antiblock-Additive
dadurch gekennzeichnet, dass das Schichtsilikat in Form von Mikropartikeln und Nanopartikeln vorliegt. Die Zusammensetzungen können auch wässrige Lösungen oder Dispersionen sein. Der Anteil an Wasser kann bis zu 95 Gew. % ausmachen. Die Zusammensetzungen sind insbesondere geeignet um als Beschichtung von Verpackungsmaterial wie PE-Folien oder Papier aufgebracht zu werden. Sie können zur Herstellung von Schichten eines mehrschichtigen Verbundmaterial dienen. Dafür wird das Wasser entfernt. Die Beschichtung wird also nach dem Aufbringen auf einen Träger getrocknet. Die Angaben zu Zusammensetzungen ohne Wasser können sich somit auch auf die Mengen der Bestandteile in den getrockneten Produkten oder Schichten beziehe, die sich aus den Zusammensetzungen herstellen lassen.

Eine weitere Ausführungsform betrifft Zusammensetzungen, insbesondere für die Herstellung von Lebensmittelverpackungen, enthaltend oder bestehend aus
30 - 80 Gew. % Polyvinylalkohol
20 - 50 Gew. % eines Schichtsilikats
5 - 30 Gew% Weichmacher
50 - 90 Gew% Lösungsmittel, bevorzugt Wasser
dadurch gekennzeichnet, dass das Schichtsilikat in Form von Mikropartikeln und Nanopartikeln vorliegt.

Eine weitere Ausführungsform betrifft Zusammensetzungen, insbesondere für die Herstellung von Lebensmittelverpackungen, enthaltend oder bestehend aus
20 - 70 Gew. % Polyvinylalkohol
10 - 50 Gew. % eines Schichtsilikats
5 - 30 Gew% Weichmacher
0 - 2 Gew% Zusatzstoffe, und
0 - 30 Gew% Lösungsmittel, bevorzugt Wasser
dadurch gekennzeichnet, dass das Schichtsilikat in Form von Mikropartikeln und Nanopartikeln vorliegt.

Eine zusätzliche Ausführungsform betrifft Zusammensetzungen, insbesondere für die Herstellung von Lebensmittelverpackungen, bestehend aus
20 - 70 Gew. % Polyvinylalkohol
10 - 50 Gew. % eines Schichtsilikats
5 - 30 Gew% Weichmacher, und
0 - 30 Gew% Lösungsmittel, bevorzugt Wasser
dadurch gekennzeichnet, dass das Schichtsilikat in Form von Mikropartikeln und Nanopartikeln vorliegt. Diese Zusammensetzung hat keine weiteren Zusätze ausser unvermeidbaren Verunreinigungen, die weniger als 0,1 Gew. % und bevorzugt weniger als 0,01 Gew.% betragen.

Ein anderer Aspekt der vorliegenden Erfindung ist ein Verfahren zum Herstellen der erfindungsgemäßen Zusammensetzung, umfassend die Schritte:
- Bereitstellung einer Dispersion von Nanopartikeln eines Schichtsilikats
- Bereitstellung einer Dispersion von Mikropartikeln des Schichtsilikats
- Bereitstellung einer Lösung von Polyvinylalkohol und einem Weichmacher
- Mischen der Lösung von Polyvinylalkohol und einem Weichmacher mit der Dispersion von Mikropartikeln
- Hinzufügen der Dispersion von Nanopartikeln.

Der Ablauf dieses Verfahrens hat sich als besonders geeignet herausgestellt, da so eine homogene Mischung bzw. Dispersion entstehen kann und ein übermäßiges Schäumen verhindert wird. Grundsätzlich gelten die Aussagen, die zuvor im Zusammenhang mit der Zusammensetzung gemacht wurden auch für die Herstellungsverfahren, soweit sinnvoll.

Sowohl die Dispersion der Nanopartikel, die Dispersion der Mikropartikel als auch die Lösung des Polyvinylalkohols mit dem Weichmacher nutzen bevorzugt Wasser als Lösungsmittel. Die Konzentration der Nanopartikel kann bei 7 - 12 Gew. % (bevorzugt 10 Gew. %) liegen, da je nach Größe/Größenverteilung bei Wegfall der Scherung, sprich ohne Rühren, gelartige Feststoff entstehen. Die Dispersion von Mikropartikel kann in Form eines Konzentrats hergestellt werden, so dass die gewünschte Konzentration der hergestellten Zusammensetzung durch Zugabe von relativ wenig Volumen erreicht werden kann.

Ein alternatives Verfahren zum Herstellen der erfindungsgemäßen Zusammensetzung, umfasst die Schritte:
- Bereitstellung einer Dispersion von Nanopartikeln eines Schichtsilikats
- Bereitstellung der Mikropartikel des Schichtsilikats in Form eines Pulvers
- Bereitstellung einer Lösung von Polyvinylalkohol und einem Weichmacher
- Mischen der Lösung von Polyvinylalkohol und einem Weichmacher mit den pulverförmigen Mikropartikeln unter Rühren
- Hinzufügen der Dispersion von Nanopartikeln.

Die Verwendung eines Hochgeschwindigkeitsmischers bei der Herstellung der Dispersion der Nanopartikel ist hilfreich um Agglomerate beim Mischen zu verhindern bzw. komplett aufzulösen und so eine vollständige Dispersion in Wasser zu erzeugen. Auch bei der Vermischung dieser Dispersionen mit der Lösung von Polyvinylalkohol und Weichmachern hat sich diese Verfahrensweise als besonders geeignet herausgestellt. Die so hergestellten Zusammensetzungen eignen sich hervorragend für Beschichtungen. Dafür müssen die Zusammensetzungen, die Wasser enthalten getrocknet werden.

Eine Ausführungsform der Erfindung umfasst eine Zusammensetzung umfassend oder bestehend aus
1 - 10 Gew. % Polyvinylalkohol, bevorzugt 2 Gew.% PVOH
5 - 20 Gew. % eines Schichtsilikats, bevorzugt 8 Gew.% mit einem Verhältnis 3:1 von Nanotalkum zu Mikrotalkum
0 - 2 Gew% Weichmacher, und
80 - 90 Gew% Wasser.

Aus dieser Zusammensetzung kann man sehr dünne Schichten mit einer sehr guten Sauerstoffbarrriere oder allgemein sehr guten Gasbarriere herstellen. Sie ist allerdings nur schwer als homogene Beschichtung aufzutragen, und nach dem Trocknen v. a. bei sehr hohen Schichtsilikatanteilen eher spröde. Dies kann mit einer geringen Menge Weichmacher in der fertigen Beschichtung verbessert werden.

Eine weitere Ausführungsform der Erfindung umfasst eine Zusammensetzung umfassend oder bestehend aus
10 - 20 Gew. % Polyvinylalkohol,
15- 25 Gew. % eines Schichtsilikats,
2 - 6 Gew% Weichmacher und
49 - 73 Gew% Wasser.

Eine weitere Ausführungsform der Erfindung umfasst eine Zusammensetzung umfassend oder bestehend aus
14 - 18 Gew. % Polyvinylalkohol,
18- 22 Gew. % eines Schichtsilikats, mit einem Verhältnis 1:3 von Nanopartikeln zu Mikropartikeln
3 - 5 Gew% Weichmacher und

Den Rest auf 100 Gew. % mit Wasser aufgefüllt. Es ist bevorzugt, wenn das Feststoffverhältnis in diesen beiden Zusammensetzungen bei 4:3:1 = PVOH/Weichmacher : Mikropartikel Schichtsilikat: Nanopartikel Schichtsilikat liegt.

Es hat sich gezeigt, dass diese Zusammensetzung es erlaubt einen hohen Feststoffgehalt gut zu Beschichtungen, Mehrschicht-Folien oder Kompositmaterialien zu verarbeiten. Die Beschichtungen trocknen insbesondre ohne die Bildung von Defekten. Aus diesen Zusammensetzungen hergestellte Produkte lassen sich sehr gut trocknen. So können preisgünstige, multifunktionale Barrriereschichten hergestellt werden. Zudem eignet sich diese Zusammensetzung als Kaschierkleber für mehrschichtige Materialien. Diese Zusammensetzungen bzw. daraus hergestellte Schichten haften gut auf diversen Trägern wie Papier, PET-Folien oder PE/PP-Folien. Die Zusammensetzung kann z.B. gut mittels Nasskaschierung aufgetragen werden.

Bei unpolaren Untergründen können vorherige Coronabehandlungen oder zusätzliche Haftvermittler zum Einsatz kommen.

Es haben sich aber auch Zusammensetzungen ohne Wasser als gut geeignet herausgestellt. Diese stellen extrudierbare PVOH-Compounds für eine Extrusionskaschierung & -beschichtung dar. Eine entsprechende Ausführungsform der Erfindung umfasst eine Zusammensetzung aus
50 - 75 Gew. % Polyvinylalkohol, bevorzugt 60 - 65 Gew. %
15- 25 Gew. % eines Schichtsilikats, bevorzugt 18 - 22 Gew. % mit einem Verhältnis 1:3 bis 1:20 von Nanotalkum zu Mikrotalkum
10 - 25 Gew% Weichmacher bevorzugt Glyzerin und
0 - 5 Gew% Wasser.

Es kann von Vorteil sein bei der Verarbeitung dieser Zusammensetzung auf Wasser ganz oder zumindest weitestgehend zu verzichten, da dann ein aufwendiger und energieintensiver Trocknungsschritt entfällt. Bei einer Erhitzung auf über 100°C kann Wasser in der Zusammensetzung zur Blasenbildung bzw. zum Schäumen führen. Auch sonst ist die Verarbeitung ohne Wasser eventuell weniger aufwendig und weniger energieintensiv, die Herstellung der Zusammensetzung ist es ebenfalls. Andererseits erlaubt der Zusatz von Wasser als Lösungsmittel eine deutlich variablere Rezeptureinstellung mit wesentlich höheren Anteilen der Schichtsilikate und entsprechend verbesserte Barriereeigenschaften. Eine mögliche Nutzung ist die Herstellung einer Barriereschicht oder -folie durch Extrusion oder Coextrusion mit anderen Polymeren (ggf. unter Einsatz zusätzlicher Haftvermittlerschichten) zu mehrschichtigen Materialien. Hier ist eine Kombination mit PE, PP oder PET sehr einfach möglich. Besonders gut ist eine Kombination wobei Schichten aus PE, PP oder PET aussen anliegen und so die Schicht aus der erfinderischen Zusammensetzung einschliessen. Auf diese Art kann man sowohl ein Material herstellen, welches eine sehr gute Sauerstoffbariere durch die erfindungsgemässe Zusammensetzung und eine sehr gute Wasserdampfbarriere aufgrund der Aussenschichten besitzt.

Die Zusammensetzungen eignen sich auch für die Herstellung (z.B. mittels Extrusionskaschierung) einer wasserlöslichen, wiedergewinnbaren/rezyklierbaren Schicht, die sowohl eine Sauerstoffbarriere bildet als auch zwei weitere Schichten miteinander verkleben kann. Der Nachteil liegt darin, dass weniger Schichtsilikat zugegeben werden kann, was die Sauerstoff- und Wasserdampfbarriere weiter verbessern würde.

### Beispiele:

Eine Zusammensetzung umfassend 16 Gew. % PVOH, 4 % Glyzerin, 15 Gew.% Talkum als Mikropartikel (Finntalc M05SL) und 5 Gew.% Talkum als Nanopartikel (Nanoclay von Cloisite) wurde hergestellt indem eine Lösung von Polyvinylalkohol (Selvol^{™} 205 - 4 Gew. %) in Wasser einer wässrigen Dispersion von Mikropartikeln vermischt wurde und zu der erhaltenen Mischung eine wässrige Dispersion von Nanopartikeln zugegeben wurde. Zur schrittweisen Vermischung der Bestandteile wurde ein Hochgeschwindigkeitsmixer eingesetzt. Diese Lösung wurde auf verschiedene bekannte Materialien als Beschichtung aufgetragen. Anschliessend die OTR (Sauerstofftransmissionsrate) gemessen. Die OTR ist die stationäre Rate, mit der Sauerstoffgas unter bestimmten Bedingungen (Temperatur und relative Luftfeuchtigkeit) durch die entsprechende Folie (gegebenenfalls aus mehreren Schichten) dringt. Die Testbedingungen waren 23°C und 50% Luftfeuchtigkeit.

Folgende Ergebnisse wurden erhalten:

| Folie | Beschichtung aus der oben beschriebenen Zusammensetzung | Haftung | OTR 23/50 cm3/(m2 · d·bar) |
|---|---|---|---|
| PE-Kaschierfolie, 60 µm | Einmalig 4 - 7 µm | gut | 3,8 - 4,9 |
| PE-Kaschierfolie, 60 µm | Zweimalig, insgesamt 7 - 10 µm | gut | 2,1 - 3,7 |
| PP soft, schwarz 100 µm** | Zweimalig, insgesamt 7 - 10 µm | sehr gut | 3,1 - 4,1 |
| ecovio^{®} (PBAT, PLA) 30 µm | keine | | 50-70 |
| Papier/Beschichtung/ 30 µm ecovio^{®} | Einmalig 4 - 7 µm | | 3,9 |
| Papier / 2 g/m² PVOH | keine | | 30 |
| Papier / 2 g/m² PVOH | Einmalig 3 - 3,5 µm | | 17 |
| Papier = PackPro 7, 80 g (Brigl & Bergmeister) | | | |

## Patentansprüche

1. Zusammensetzung, insbesondere für die Herstellung von Lebensmittelverpackungen, umfassend
2 - 95 Gew. % Polyvinylalkohol
3 - 70 Gew. % eines Schichtsilikats
0 - 30 Gew% Weichmacher und
0 - 95 Gew% Wasser
**dadurch gekennzeichnet, dass** das Schichtsilikat in Form von Mikropartikeln und Nanopartikeln vorliegt.

2. Zusammensetzung gemäß Anspruch 1, wobei das Schichtsilikat Talkum mit der chemischen Zusammensetzung Mg₃Si₄O₁₀(OH)₂ ist.

3. Zusammensetzung gemäß Anspruch 1, wobei das Schichtsilikat in Form von Mirko- und Nanopartikeln als Mischung aus Talkum und Montmorillonit, vorliegt.

4. Zusammensetzung gemäß einem der vorhergehenden Ansprüche, wobei die Mikropartikel einen maximalen Durchmesser von 0.3 - 5 µm und die Nanopartikel einen maximalen Durchmesser von 100 - 500 nm und eine Dicke von 2 bis 15 nm haben.

5. Zusammensetzung gemäß einem der vorhergehenden Ansprüche, umfassend
10 - 20 Gew. % Polyvinylalkohol
15- 25 Gew. % eines Schichtsilikats
2 - 6 Gew% Weichmacher und
49 - 73 Gew% Wasser.

6. Zusammensetzung gemäß einem der vorhergehenden Ansprüche, umfassend
50 - 75 Gew. % Polyvinylalkohol
15- 25 Gew. % eines Schichtsilikats
10 - 25 Gew% Weichmacher und
0 - 5 Gew% Wasser.

7. Zusammensetzung gemäß einem der vorhergehenden Ansprüche, umfassend
1 - 10 Gew. % Polyvinylalkohol
5 - 20 Gew. % eines Schichtsilikats
0 - 2 Gew% Weichmacher und
80 - 90 Gew% Wasser.

8. Zusammensetzung gemäß einem der vorhergehenden Ansprüche, wobei das Verhältnis des Gewichts von Mikro- zu Nanopartikeln bei 70-90:30-10 ist.

9. Zusammensetzung gemäß einem der vorhergehenden Ansprüche, wobei die Nanopartikel als Nanopartikel chemisch synthetisiert wurden.

10. Zusammensetzung gemäß einem der vorhergehenden Ansprüche, wobei bis zu 5 Gew% weitere Zusatzstoffe enthalten sind.

11. Verfahren zum Herstellen der Zusammensetzung nach einem der Ansprüche 1 - 9, umfassend die Schritte:
Bereitstellung einer Dispersion von Nanopartikeln eines Schichtsilikats
- Bereitstellung einer Dispersion von Mikropartikeln des Schichtsilikats
- Bereitstellung einer Lösung von Polyvinylalkohol
- Mischen der Lösung von Polyvinylalkohol mit der Dispersion von Mikropartikeln
- Hinzufügen der Dispersion von Nanopartikeln.

12. Verfahren gemäß Anspruch 11, wobei die Dispersion der Nanopartikel, die Dispersion der Mikropartikel und die Lösung des Polyvinylalkohols als Lösungsmittel Wasser aufweisen.

13. Verfahren gemäß Anspruch 11 oder 12, wobei die Dispersion der Nanopartikel und die Dispersion der Mikropartikel mit Hilfe eines Hochgeschwindigkeitsmixers hergestellt und mit der Lösung von Polyvinylalkohol vermischt werden.

14. Verfahren gemäß einem der Ansprüche 11 bis 13, wobei die Lösung des Polyvinylalkohols zusätzlich einen Weichmacher aufweist.

15. Verfahren gemäß einem der Ansprüche 11 bis 14, wobei in einem weiteren Verfahrensschritt der Lösung durch Trocknung Wasser entzogen wird.
